# EUROPEAN PATENT APPLICATION

(11) **EP 3 518 464 A1**
(43) Date of publication of application: **31.07.2019**
(21) Application number: 16916538.8
(22) Date of filing: 23.09.2016
(51) Int. Cl.: H04L 12/24, H04L 29/10

(54) **NETWORK PORT TYPE IDENTIFICATION METHOD, APPARATUS AND STORAGE MEDIUM**

(71) Applicant: ZTE Corporation, Shenzhen, Guangdong 518057 (CN)
(72) Inventor: GAO, Fei, Shenzhen Guangdong 518057 (CN)
(74) Representative: Herzog, Fiesser & Partner Patentanwälte PartG mbB
(86) International application number: PCT/CN2016/099856
(87) International publication number: WO 2018/053799

(57) **Abstract**

Disclosed is a network port type identification method, for use in a first device compatible with a local area network (LAN) port and a wide area network (WAN) port. The method includes: acquiring, by the first device, an interaction message between the first device and a second device connected to the first device after receiving an access signal from the second device; determining a message type of the interaction message; and determining a network port type based on the message type, wherein the network port type includes a LAN port and a WAN port.

## Description

### TECHNICAL FIELD

The present disclosure relates to the technical field of communication, and in particular, to a network port type identification method, a network port type identification apparatus, and a storage medium.

### BACKGROUND

In the process of implementing the embodiments of the present application, the inventor of the present application has found that at least a following technical problem exists in related technologies.

With respect to multiplexing of a same network port, it is a traditional practice that a home gateway product is connected to a specific device via a network cable in a particular mode. In other words, when plugged via the network cable into a device such as customer premises equipment (CPE) compatible with a local area network (LAN) port and a wide area network (WAN) port, the network port can only be either a LAN port or a WAN port. That is, the CPE can be either in a gateway mode or in a broadband mode. Specifically, when the CPE is plugged via the network cable into the network port in the gateway mode, the network port is a LAN port, and at this time the CPE is a server terminal which is connected to a client terminal (for example, a computer); and when the CPE is plugged via the network cable into the network port in the broadband mode, the network port is a WAN port, and at this time the CPE is a client terminal which is connected to a fixed network.

Therefore, if a user who does not know about the current working mode of the CPE connects a device (a server terminal device or a client terminal device) to the CPE via the network cable, the device cannot get desired service. This leads to a poor user experience. Accordingly, there is an urgent need to provide a technical solution for automatically identifying whether a current network port serves as a LAN port or a WAN port.

### SUMMARY

In this regard, it is intended to provide a network port type identification method and a network port type identification apparatus, which at least solve the problem in existing technologies and can realize automatic identification of a LAN port and a WAN port.

The embodiments of the present disclosure are implemented as follows.

A network port type identification method is provided, and the method may be used in a first device compatible with a local area network (LAN) port and a wide area network (WAN) port. The method includes: acquiring, by the first device, an interaction message between the first device and a second device connected to the first device after receiving an access signal from the second device; determining a message type of the interaction message; and determining a network port type based on the message type, wherein network port type includes a LAN port and a WAN port.

In an embodiment, determining the message type of the interaction message includes: determining a message type of an interaction message sent by the second device.

In an embodiment, determining a network port type based on the message type includes:
determining a message mode of the message based on the message type, the message mode including an IP requesting mode and an IP assigning mode;
determining that the network port type is the LAN port when the message mode is the IP requesting mode; and
determining that the network port type is the WAN port when the message mode is the IP assigning mode.

In an embodiment, determining a network port type based on the message type further includes: determining that the message mode of the message is the IP requesting mode when the message type is a dynamic host configuration protocol (DHCP) request message; and determining that the network port type is the LAN port correspondingly, and configuring the first device as a server terminal.

In an embodiment, determining a network port type based on the message type further includes: determining that the message mode of the message is the IP assigning mode when the message type is a DHCP response message; and determining that the network port type is the WAN port correspondingly, and configuring the first device as a DHCP client terminal.

In an embodiment, determining a network port type based on the message type further includes: determining that the message mode of the message is the IP assigning mode when the message type is a point to point protocol over Ethernet (PPPOE) response message; and determining that the network port type is the WAN port correspondingly, and configuring the first device as a PPPOE client terminal.

In an embodiment, the method further includes: sending, by the first device, a DHCP response message and a PPPOE response message to a network card corresponding to a network port periodically.

In an embodiment, the method further includes: switching a network port type of the first device to the network port type determined when the network port type determined is different from the network port type currently configured.

A network port type identification apparatus is provided. The apparatus includes: an acquiring module, a determining module, and an identifying module, wherein:
the acquiring module is configured to acquire an interaction message between the apparatus and access device after receiving an access signal from the access device;
the determining module is configured to determine a message type of the interaction message; and
the identifying module is configured to determine a network port type based on the message type, wherein the network port type includes a LAN port and a WAN port.

In an embodiment, the determining module is specifically configured to determine a message type of an interaction message from the access device.

In an embodiment, the identifying module is specifically configured to:
determine a message mode of the message based on the message type, the message mode including an IP requesting mode and an IP assigning mode;
determine that the network port type is the LAN port when the message mode is the IP requesting mode; and
determine that the network port type is the WAN port when the message mode is the IP assigning mode..

In an embodiment, the identifying module is further configured to: determine that the message mode of the message is the IP requesting mode when the message type is a dynamic host configuration protocol (DHCP) request message; and determine that the network port type is the LAN port correspondingly, wherein the apparatus is configured as a server terminal.

In an embodiment, the identifying module is further configured to: determine that the message mode of the message is the IP assigning mode when the message type is a DHCP response message; and determine that the network port type is the WAN port correspondingly, wherein the apparatus is configured as a DHCP client terminal.

In an embodiment, the identifying module is further configured to: determine that the message mode of the message is the IP assigning mode when the message type is a point to point protocol over Ethernet (PPPOE) response message; and determine that the network port type is the WAN port correspondingly, wherein the apparatus is configured as a PPPOE client terminal.

In an embodiment, the apparatus further includes a sending module, which is configured to send a DHCP response message and a PPPOE response message to a network card corresponding to a network port periodically.

In an embodiment, the apparatus further includes: a switching module, which is configured to switch a network port type of the apparatus to the network port type determined when the network port type determined is different from the network port type currently configured.

A computer storage medium is further provided in the embodiments of the present disclosure. A computer program is stored in the computer storage medium, and the computer program is used to perform the above network port type identification method in the embodiments of the present disclosure.

A network port type identification method, a network port type identification apparatus, and a storage medium are provided in the embodiments of the present disclosure. The methods includes: acquiring, by the first device, an interaction message between the first device and a second device connected to the first device after receiving an access signal from the second device; determining a message type of the interaction message; and determining a network port type based on the message type, wherein the network port type includes a LAN port and a WAN port. By means of the embodiments of the present disclosure, at least the problem in existing technologies can be solved, and automatic identification of the LAN port and the WAN port can be realized so as to improve the user experience.

### BRIEF DESCRIPTION OF THE DRAWINGS

Fig. 1 schematically shows a flowchart of a network port type identification method according to a first embodiment of the present disclosure.
Fig. 2 schematically shows a flowchart of a network port type identification method according to a second embodiment of the present disclosure.
Fig. 3 schematically shows a structure of a network port type identification apparatus according to a third embodiment of the present disclosure.
Fig. 4 schematically shows a structure of another network port type identification apparatus according to a fourth embodiment of the present disclosure.

### DETAILED DESCRIPTION

Implementations of the embodiments will be explained below in details with reference to the accompanying drawings.

### Embodiment One

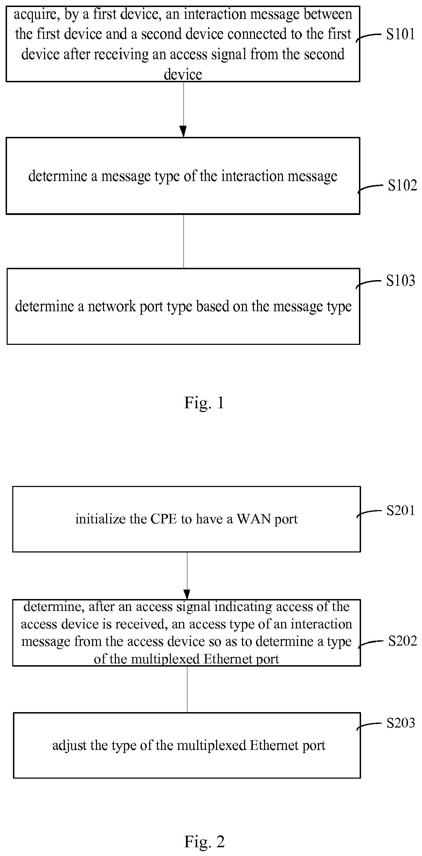

The present embodiment provides a network port type identification method. The method may be used in a first device compatible with a local area network (LAN) port and a wide area network (WAN) port. As shown in Fig. 1, the method includes the following steps.

At step S101, the first device acquires an interaction message between the first device and a second device connected to the first device, after receiving an access signal from the second device.

Here, the first device may be a device such as CPE, and the second device is an access device which is connected to the CPE via a network cable. When the second device is connected to a network port of the first device via the network cable, the network port sends the access signal from the second device to interior of the first device to inform the first device of current access of the second device. At this time, the first device acquires an interaction message between the second device and the first device. Here, the interaction message acquired includes an interaction message sent by the first device to the second device and an interaction message sent by the second device to the first device.

Here, the network port may be a multiplexed Ethernet port. A device periodically sends a dynamic host configuration protocol (DHCP) request message and a point to point protocol over Ethernet (PPPOE) request message to a network card corresponding to the multiplexed Ethernet port.

At step S102, a message type of the interaction message is determined.

The first device may determine the message type of the interaction message from the second device, i.e., the interaction message sent by the second device to the first device. Here, the interaction message from the second device include: a DHCP request message, a DHCP response message, a PPPOE response message, and so on. A message mode of the DHCP request message is an IP requesting mode, and a message mode of the DHCP response message and the PPPOE response message is an IP assigning mode.

At step S103, a network port type is determined based on the message type. The network port type includes a LAN port and a WAN port.

Here, a message mode of the message is determined based on the message type. The message mode includes an IP requesting mode and an IP assigning mode. When the message mode is an IP requesting mode, it is determined that the network port type is a LAN port; and when the message mode is an IP assigning mode, it is determined that the network port type is a WAN port. Specifically, when the message type is the DHCP request message, the message mode of the message is the IP requesting mode, and the network port type is the LAN port, the device being configured as a server terminal. When the message type is the DHCP response message, the message mode of the message is the IP assigning mode, and the network port type is the WAN port, the device being configured as a DHCP client terminal. When the message type is the PPPOE response message, the message mode of the message is the IP assigning mode, and the network port type is the WAN port, the device being configured as a PPPOE client terminal.

The method further includes a step that when the network port type determined is different from a network port type currently configured, the network port type of the device is switched to the network port type determined. In other words, when the network port type determined at step S103 is the WAN port, but the network port type currently configured is the LAN port, the network port type is switched from the WAN port to the LAN port; and when the network port type determined at step S103 is the LAN port, but the network port type currently configured is the WAN port, the network port type is switched from the LAN port to the WAN port.

It shall be noted that when the network port type determined is different from the network port type currently configured, the network port type of the device is switched to the network port type determined; and when the network port type determined is same as the network port type currently configured, the network port type of the device is not changed, and an original network port type is maintained.

### Embodiment Two

In the present embodiment, by taking a CPE having a multiplexed Ethernet port whose initial state is a WAN port as an example, the network port type identification method provided in Embodiment One of the present disclosure is further explained. However, it shall be noted that the original state of the multiplexed Ethernet port may also be a LAN port, which is not limited in the present disclosure.

As shown in Fig. 2, the method includes the following steps.

At step 201, the CPE is initialized to have a WAN port.

After being booted up, the CPE may be initialized to be in a broadband mode, and the multiplexed Ethernet port is initialized to be the WAN port, which is used as an initial mode. After being initialized, the CPE enables a function of monitoring an IP application, to monitor in real time whether an access device connected to the CPE via the multiplexed Ethernet port sends a DHCP request message to the CPE. Here, the IP application includes an IP application through the access device connected via the multiplexed Ethernet port, an IP application of a wifi user, an IP application via other Ethernet network ports, and so on. While the CPE enables the function of monitoring the IP application, the CPE periodically sends a DHCP request message to a network card corresponding to the multiplexed Ethernet port. The DHCP request message is a request message for applying for an IP address.

It shall be noted that the two tasks, i.e., monitoring in real time and periodically sending the request message may belong to different processes and may be performed in different processes, but they both belong to tasks to be completed by the CPE itself.

At step S202, after an access signal indicating access of the access device is received, an access type of an interaction message from the access device is determined so as to determine a type of the multiplexed Ethernet port.

If a request for an IP application such as a DHCP request message sent from the access device connected via the multiplexed Ethernet port is received, it is determined that the access device connected to the CPE is a client terminal, and at this time step S203 is performed.

At step S203, the type of the multiplexed Ethernet port is adjusted. Specifically, the type of the multiplexed Ethernet port is switched to the LAN port, and correspondingly the CPE is switched to a gateway mode and is configured as a server terminal.

If a message for an IP assignment such as a DHCP response message or a PPPOE response message sent from the access device connected via the multiplexed Ethernet port is received, it is determined that the access device connected to the CPE is a DHCP server terminal or a PPPOE server terminal. The type of the multiplexed Ethernet port of the CPE, i.e., the WAN port, is maintained; and the CPE is in the broadband mode and is configured as a DHCP client terminal or a PPPOE client terminal.

If one of the two types of message for an IP assignment sent from the access device connected via the multiplexed Ethernet port, i.e., a DHCP response message or a PPPOE response message, is received, the CPE may have two IP assignment manners in the broadband mode according to the message received, i.e., a DHCP manner and a PPPOE manner.

When the DHCP response message is received, it is indicated that a server terminal connected is a DHCP server, and at this time the CPE is set as in a DHCP broadband mode; and when the PPPOE response message is received, it is indicated that a server terminal connected is a PPPOE server, and at this time the CPE is set as in a PPPOE broadband mode.

It shall be noted that whether the CPE is in a 4G gateway mode, in the DHCP broadband mode, or in the PPPOE broadband mode, interior of the CPE still periodically sends an IP application request to the multiplexed Ethernet port. The request sent includes a PPPOE request and a DHCP request so as to prevent a role of the access device connected via the multiplexed Ethernet port from changing (i.e., changing between a client terminal and a server terminal).

In the present embodiment, after the CPE is powered on, the interior of the CPE periodically sends the PPPOE request and the DHCP request to the network card corresponding to the multiplexed Ethernet port, and the CPE continuously monitors whether the access device connected to the CPE via the multiplexed Ethernet port sends a DHCP request. In a process of identifying the LAN port and the WAN port, three processes are involved, i.e., a process of discovering a PPPOE-server, a process of discovering a DHCP-server, and a process of discovering a client terminal. When the access signal of the access device is received, message interaction in the three processes is as follows.

### a. The process of discovering a PPPOE-server

In a stage of discovering a PPPOE-server, the CPE broadcasts and sends a PADI message to find a PPPOE-server. If a PPPOE-server exists in a network and receives the PADI message sent by the CPE, the PPPOE-server sends a PADO message to the CPE as a response. After the CPE receives the PADO message sent by the PPPOE-server, the CPE sends a PADR message to the PPPOE-server, and the PPPOE-server sends a PADS message to the CPE as a response.

If the CPE receives the PADO message or the PADS message after sending a PPPOE request message periodically, it can be determined whether the device currently connected via the multiplexed Ethernet port is the PPPOE-server. If the PADO message or the PADS message is received, it can be determined that the CPE is connected to the PPPOE-server via the multiplexed Ethernet port. Accordingly, the multiplexed Ethernet port is set as the WAN port, and the CPE is configured as in the PPPOE broadband mode.

### b. The process of discovering a DHCP-server

When the CPE, as a client terminal, applies for an IP from the DHCP server for the first time, four steps are needed. The four steps are: DHCP Discover (a message is sent from the CPE to the DHCP server) ---> DHCP Offer (a message is sent from the DHCP server to the CPE) ----> DHCP Request (a message is sent from the CPE to the DHCP server) ----> DHCP Ack (a message is sent from the DHCP server to the CPE).

When the CPE, after sending a DHCP request message, receives a DHCP Offer message or a DHCP Ack message sent by the server terminal, it can be determined whether the device currently connected via the multiplexed Ethernet port is the DHCP server. If the DHCP Offer message or the DHCP Ack message is received, it can be determined that the CPE is connected to the DHCP server via the multiplexed Ethernet port. Accordingly, the multiplexed Ethernet port is set as the WAN port, and the CPE is configured as in the DHCP broadband mode.

### c. The process of discovering a client terminal

When the CPE is used as a server terminal, four steps are needed in a process of applying an IP by the client terminal connected to the CPE in the DHCP manner. The four steps are: DHCP Discover (a message is sent from the client terminal to the CPE) ----> DHCP Offer (a message is sent from the CPE to the client terminal) ----> DHCP Request (a message is sent from the client terminal to the CPE) ----> DHCP Ack (a message is sent from the CPE to the client terminal). If the CPE receives a DHCP Discover message or a DHCP Request message sent via the multiplexed Ethernet port, it is considered that the device currently connected is the client terminal. At this time, the multiplexed Ethernet port is set as the LAN port, and a current mode of the CPE is set as in the gateway mode.

In a method for automatically identifying the LAN port and the WAN port provided in the present embodiment, the CPE may use the multiplexed Ethernet port as either the LAN port or the WAN port initially. In a process of switching from the LAN port to the WAN port or switching from the WAN port to the LAN port, by updating a WAN IP address, a DNS address of the CPE, iptables rules relevant to the network card and so on, switching between the WAN port and the LAN port can be achieved so as to be adaptive to changes of an upstream path of the CPE.

### Embodiment Three

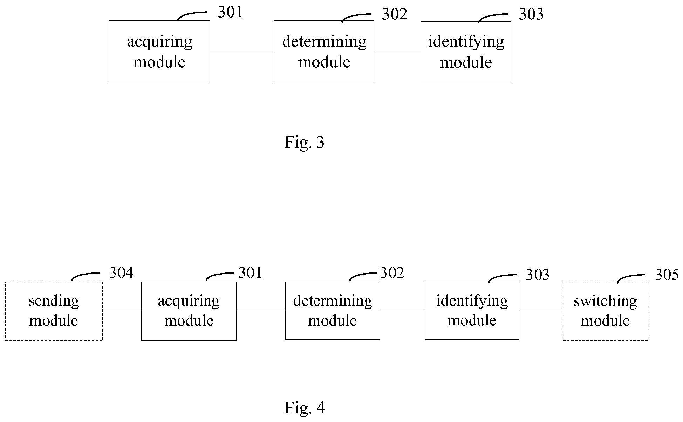

The present embodiment provides a network port type identification apparatus, for use in a first device compatible with a LAN port and a WAN port. As shown in Fig. 3, the apparatus includes an acquiring module 301, a determining module 302, and an identifying module 303.

The acquiring module 301 is configured to acquire an interaction message between the apparatus and an access device after receiving an access signal of the access device.

The determining module 302 is configured to determine a message type of the interaction message.

Specifically, the determining module 302 is configured to determine a message type of the interaction message from the access device.

The identifying module 303 is configured to determine a network port type based on the message type. The network port type may be a LAN port or a WAN port.

Specifically, the identifying module 303 is configured to determine a message mode of the message. The message mode may be an IP requesting mode or an IP assigning mode. When the message mode is the IP requesting mode, it is determined that the network port type is the LAN port; and when the message mode is the IP assigning mode, it is determined that the network port type is the WAN port.

Here, when the message type is a dynamic host configuration protocol (DHCP) request message or a PPPOE request message, it is determined that the message mode of the message is the IP requesting mode; and correspondingly, it is determined that the network port type is the LAN port, and the apparatus is configured as a server terminal. When the message type is a DHCP response message, it is determined that the message mode of the message is the IP assigning mode; and correspondingly, it is determined that the network port type is the WAN port, and the apparatus is configured as a DHCP client terminal. When the message type is a point to point protocol over Ethernet (PPPOE) response message, it is determined that the message mode of the message is the IP assigning mode; and correspondingly, it is determined that the network port type is the WAN port, and the apparatus is configured as a PPPOE client terminal.

As shown in Fig. 4, the apparatus may further include: a sending module 304 and a switching module 305. The sending module 304 is configured to periodically send the DHCP request message and the PPPOE request message from the first device to a network card corresponding to a network port. The switching module 305 is configured to switch a network port type of the first device to a network port type determined when the network port type determined is different from the network port type currently configured for the port.

The acquiring module 301, the determining module 302, the identifying module 303, the sending module 304, and the switching module 305 in the network port type identification apparatus provided in the present embodiment may all be realized by a processor, and it is certain that these modules may also be realized by a specific logic circuit. In actual application, the processor can be a central processing unit (CPU), a microprocessor unit (MPU), a digital signal processor (DSP) or a field programmable gate array (FPGA).

If integrated modules in the present embodiment are realized in a form of software functional modules and are sold or used as independent products, they can also be stored in a computer readable storage medium. Based on such understanding, the technical solution of the present embodiment substantively, or a portion of contribution thereof made to the existing technologies, can be embodied in a form of a software product. The computer software product can be stored in a storage medium and includes several instructions so as to enable a computer device (which may be a personal computer, a server, or a network device etc.) to execute all or part of the methods in respective embodiments of the present disclosure. The storage medium includes various mediums that can be used to store program codes such as a USB flash disk, a mobile hard disk drive, a read-only memory (ROM), a random access memory (RAM), a diskette, or a compact disk. In this way, the present embodiment is not limited to any hardware and software combination.

Correspondingly, an embodiment of the present disclosure further provides a computer storage medium in which computer programs are stored, and the computer programs may be used to perform the above network port type identification methods.

The above embodiments are only preferred embodiments of the present disclosure, and are not intended for limiting the protection scope of the present disclosure.

## Claims

1. A network port type identification method, for use in a first device compatible with a local area network port, called a LAN port, and a wide area network port, called a WAN port, the method comprising:
acquiring, by the first device, an interaction message between the first device and a second device connected to the first device after receiving an access signal from the second device;
determining a message type of the interaction message; and
determining a network port type based on the message type, wherein the network port type includes a LAN port and a WAN port.

2. The method according to claim 1, wherein determining a message type of the interaction message comprises:
determining a message type of an interaction message sent by the second device.

3. The method according to claim 2, wherein determining a network port type based on the message type comprises:
determining a message mode of the message based on the message type, the message mode including an IP requesting mode and an IP assigning mode;
determining that the network port type is the LAN port when the message mode is the IP requesting mode; and
determining that the network port type is the WAN port when the message mode is the IP assigning mode.

4. The method according to claim 3, wherein determining a network port type based on the message type further comprises:
determining that the message mode of the message is the IP requesting mode when the message type is a dynamic host configuration protocol request message, called a DHCP request message; and
determining that the network port type is the LAN port correspondingly, and configuring the first device as a server terminal.

5. The method according to claim 3, wherein determining a network port type based on the message type further comprises:
determining that the message mode of the message is the IP assigning mode when the message type is a DHCP response message; and
determining that the network port type is the WAN port correspondingly, and configuring the first device as a DHCP client terminal.

6. The method according to claim 3, wherein determining a network port type based on the message type further comprises:
determining that the message mode of the message is the IP assigning mode when the message type is a point to point protocol over Ethernet response message, called a PPPOE response message; and
determining that the network port type is the WAN port correspondingly, and configuring the first device as a PPPOE client terminal.

7. The method according to claim 2, wherein the method further comprises:
sending, by the first device, a DHCP response message and a PPPOE response message to a network card corresponding to a network port periodically.

8. The method according to claim 1, wherein the method further comprises:
switching a network port type of the first device to the network port type determined when the network port type determined is different from the network port type currently configured.

9. A network port type identification apparatus, comprising: an acquiring module, a determining module, and an identifying module, wherein:
the acquiring module is configured to acquire an interaction message between the apparatus and access device after receiving an access signal from the access device;
the determining module is configured to determine a message type of the interaction message; and
the identifying module is configured to determine a network port type based on the message type, wherein the network port type includes a LAN port and a WAN port.

10. The apparatus according to claim 9, wherein the determining module is configured to determine a message type of an interaction message from the access device.

11. The apparatus according to claim 10, wherein the identifying module is configured to:
determine a message mode of the message based on the message type, the message mode including an IP requesting mode and an IP assigning mode;
determine that the network port type is the LAN port when the message mode is the IP requesting mode; and
determine that the network port type is the WAN port when the message mode is the IP assigning mode.

12. The apparatus according to claim 11, wherein the identifying module is further configured to:
determine that the message mode of the message is the IP requesting mode when the message type is a dynamic host configuration protocol request message, called a DHCP request message; and determine that the network port type is the LAN port correspondingly, wherein the apparatus is configured as a server terminal.

13. The apparatus according to claim 11, wherein the identifying module is further configured to:
determine that the message mode of the message is the IP assigning mode when the message type is a DHCP response message; and determine that the network port type is the WAN port correspondingly, wherein the apparatus is configured as a DHCP client terminal.

14. The apparatus according to claim 11, wherein the identifying module is further configured to:
determine that the message mode of the message is the IP assigning mode when the message type is a point to point protocol over Ethernet response message, called a PPPOE response message; and determine that the network port type is the WAN port correspondingly, wherein the apparatus is configured as a PPPOE client terminal.

15. The apparatus according to claim 10, wherein the apparatus further comprises a sending module, which is configured to send a DHCP response message and a PPPOE response message to a network card corresponding to a network port periodically.

16. The apparatus according to claim 9, wherein the apparatus further comprises a switching module, which is configured to switch a network port type of the apparatus to the network port type determined when the network port type determined is different from the network port type currently configured.

17. A computer storage medium, in which a computer program is stored, wherein the computer program is used to perform the above network port type identification method.
